Europäisches Patentamt

European Patent Office

Office européen des brevets

(11) Publication number: **0 433 030 A1**

## EUROPEAN PATENT APPLICATION

(21) Application number: 90313471.6

(22) Date of filing: **11.12.90**

(51) Int. Cl.⁵: **B62D 13/04**

The title of the invention has been amended (Guidelines for Examination in the EPO, A-III, 7.3).

(30) Priority: **15.12.89 GB 8928369**

(43) Date of publication of application:
**19.06.91 Bulletin 91/25**

(84) Designated Contracting States:
**BE DE DK ES FR GB IT NL**

(71) Applicant: **YORK TRAILER COMPANY LIMITED**
**Yafforth Road**
**Northallerton North Yorkshire, DL7 8UD(GB)**

(72) Inventor: **Davis, R C B**
**134 Front Street**
**Sowerby, Thirsk, North Yorkshire(GB)**

(74) Representative: **Allen, Oliver John Richard et al**
**Lloyd Wise, Tregear & Co. Norman House**
**105-109 Strand**
**London, WC2R 0AE(GB)**

(54) **Self tracking axle with locking mechanism.**

(57) A vehicle of the type in which one of the pairs of wheels(4),(6) thereof is carried by a self-tracking axle (10) is described. The speed of the vehicle is sensed and a control unit (36) is provided which, in response to signals indicative of the speed, serves to activate the locking mechanism (16) of the self-tracking axle (10) when the speed is at a predetermined level to fix the wheels in the straight ahead position at this speed.

EP 0 433 030 A1

Fig.1.

This invention relates to vehicles such trailers and semi-trailers. With longer vehicles the wheel sets at each end of the vehicle may consist of more than one axle. If the non-steered wheels are provided with fixed axles then the trailer turns about the centre of the axle group, or the front depending on the number in each set, and the wheels of the other axles are forced to move sideways as the vehicle goes round the bend. To prevent the wheels from being forced sideways, or "scrubbing" as it is known, it has become relatively common to provide self-tracking axles for those wheels. Many forms of self-tracking axle are known but in essence all consist of a stub axle for each wheel in a pair pivotally connected to a main axle extending between the wheels. The effect of providing the self-tracking axle is that the wheels can pivot relative to the main axle and so follow the path which the vehicle is taking without sideways slippage.

Self-tracking axles are unstable on reversing and accordingly a locking mechanism is provided for self-tracking axles which locks the wheels in the straight ahead position, that is, with their stud axes aligned with that of the axle between them, while the vehicle is being reversed. Known locking mechanisms are pneumatically or electro-pneumatically operated.

The provision of self-tracking axles gives good vehicle manoeuvrability at lower speeds. However, it has been found that the stability of self-tracking axles at high speed is not as satisfactory and in particular that the backs of vehicles provided with self-tracking axles tend to slew outwards when corners are taken at speed.

In accordance with the invention a vehicle having a number of pairs of wheels, at least one of the pairs of wheels being carried via a self-tracking axle, the self-tracking axle(s) being of the type which includes a locking mechanism which, when activated, locks the wheels in the straight ahead position, comprises at least one wheel sensor which transmits signals indicative of the speed of the vehicle to a control unit, the control unit being so arranged as to cause the self-tracking axle(s) locking mechanism(s) to be activated when the speed is at a particular predetermined level.

The locking mechanism, with which all self-tracking axles are provided as discussed above, in order to permit of stable and controlled reversing, is thus also employed to fix the wheels in the straight ahead position at any desired speed. The vehicle therefore has good manoeuvrability at low speeds, due to the provision of the self-tracking axle(s), but the unsatisfactory stability associated with the use of self-tracking axles at high speeds can be avoided by setting the control unit to activate the locking mechanism when the speed reaches the level at which instability starts.

The majority of vehicles are provided with anti-lock brakes. In such vehicles wheel sensors are provided to send wheel speed data to a control unit which in turn controls the operation of the braking system when the brakes are applied so as to prevent wheel locking. Preferably the wheel sensors and the control unit of an anti-lock brake system are also employed to control the self-tracking axles locking mechanism. Thus equipment which is already available on the majority of vehicles can be employed in a dual role: firstly to prevent wheel locking on braking, and, secondly to control self-tracking axles to give manoeuvrability at low speeds and stability at high speeds.

Suitably the control unit is an electronic control unit arranged to produce a signal when the wheel speed is at or above the desired level, the control unit being connected to activation means which, when a signal is received from the control unit, automatically activates the locking mechanism.

A particular suitable type of locking mechanism is a pneumatically operated locking mechanism. Many vehicles have pneumatic brakes and other pneumatic devices such as an air suspension system and therefore they are provided with a supply of compressed air. Thus a supply of compressed air is available for a pneumatic locking mechanism and the activation means may suitably take the form of a solenoid valve operable to permit passage of compressed air from the main vehicle air supply to the locking mechanism to activate the mechanism. The solenoid valve can also be arranged to vent the mechanism to deactivate it.

The invention will now be further described by way of example with reference to the accompanying drawings in which:-

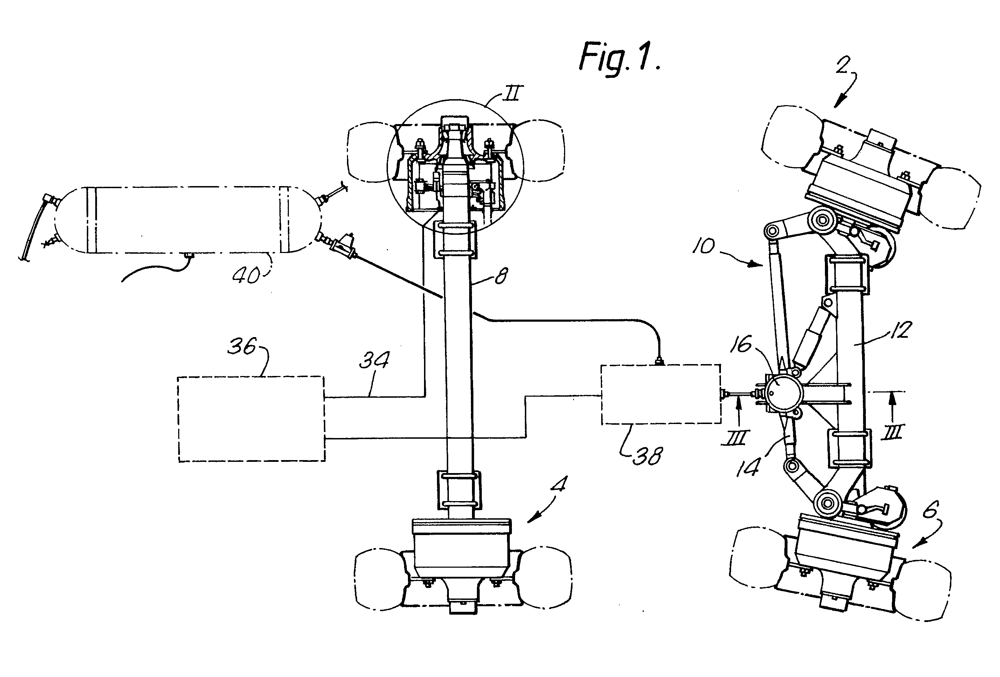

Fig. 1 is a plan view of the rear wheel set of a vehicle in accordance with the invention;

Fig. 2 is an enlarged view of the portion of Fig. I in the circle marked II, and,

Fig. 3 is a section taken along the line III-III of part of the wheel set of Fig. I.

Fig. I shows a rear wheel set 2 of a vehicle comprising two pairs of wheels 4 and 6. The pair of wheels 4 which is nearest to the front of the vehicle is provided with a rigid fixed axle 8. The pair of wheels 6 is provided with a self-tracking axle 10. The self-tracking axle 10 illustrated in the Figures is similar to the King-pin type of steering system. The details of this are not relevant and so will not be described here except to say that it consist of a main axle 12 mounted to the chassis of the vehicle and an articulated linkage which connects the main axle 12 to two stub axles, each of which carries a wheel of the pair 6.

The wheels of the pair 4 are constrained, by virtue of the fact that they are mounted on the fixed rigid axle 8, to follow a path at right angles to that axle 8. The articulated linkage of the self-tracking axle 10 allows the wheels of the pair 6 to pivot relative to the main axle 12 therebetween which prevents scrubbing of these wheels when the vehicle follows a curved path.

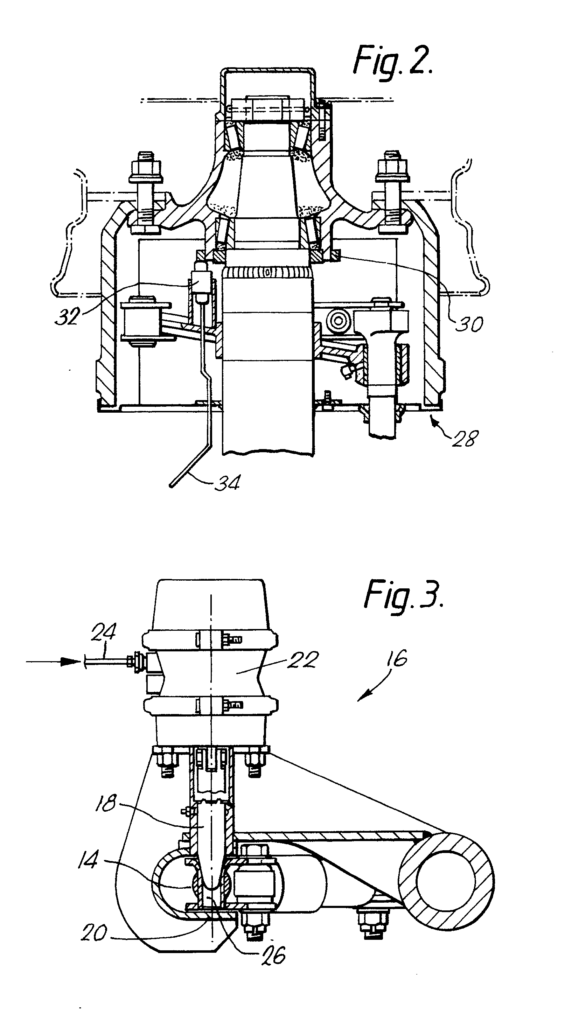

The self-tracking axle 10 includes as part of the articulated linkage, a track rod 14 which couples the action of the two wheels of the pair 6. The track rod l4 extends through a locking mechanism 16, see Fig. 3. The locking mechanism 16 includes a pin 18 movable into and out of a housing 20 in the locking mechanism 16 through which the track rod 14 passes. The pin 18 is biased by a spring towards a position out of the housing 20. The upper end of the pin 18 extends into an air chamber 22 in which is located a compressed air piston. The air chamber 22 includes an air inlet 24 via which compressed air can be supplied to the piston to cause it to expand and force the locking pin 18 down into the housing 20.

The track rod 14 includes an aperture 26 positioned such that when the pair of wheels 6 are in the straight ahead position with their axes aligned with that of the main axle 12 it is below the locking pin 18. With the track rod 14 in this position, activation of the locking mechanism l6 by supply of air to the piston in air chamber 22 thereof will cause the pin 18 to move down into the aperture 26 and hold the track rod 14 from movement within the housing 20. This will prevent the pair of wheels 6 from piveting relative to the main axle 12, and will thus hold them in the straight ahead position.

Self-tracking axles are unstable on reversing and it is for this reason that locking mechanisms are provided so that the self-tracking axle can be "locked", that is, the wheels carried on it can be fixed in the straight ahead position during reversing.

The wheels of the pairs 4 and 6 are provided with anti-lock brakes. One form of anti-lock brake 28 is shown in detail in Fig. 2 but will not be described here since it forms no part of the invention. At least one of the wheels is provided with a system for sensing the speed at which the wheel is rotating. The system may comprise an exciter ring 30 which is formed with grooves. As the wheel and hence the exciter ring 30 rotates, the exciter ring 30 passes a wheel sensor 32 which is operable to count the number of grooves passing it in a given time interval. This information is passed via a cable 34 to a control unit 36. The control unit 36 controls the operation of the anti-lock brakes 28 when the brakes are applied, in response to the information received from the sensors 32, in such a way as to prevent wheel locking.

Whilst the provision of the self-tracking axle 10 prevents scrubbing of the pair of wheels 6 and thus gives good manoeuvrability, this has been found in fact only to occur only at lower speeds. At high speeds the dynamic characteristic of self-tracking axles are not good and the rear of vehicles provided with them tends to slew outwards on hard cornering.

The anti-lock brake control unit 36 which, as described above, is provided with information as to the wheel speed of the vehicles, is employed also to control the activation of the locking mechanism 16 to cause this to lock the self-tracking axle 10 when the vehicle speed is at or above a predetermined level to prevent the slewing problems discussed above. The control unit 36 is arranged to send a signal to activation means 38, suitably in the form of a solenoid valve, when the speed of the wheels as measured by the sensor 32 reaches a predetermined level, the activation means 38 in response to the signal allowing passage of air from the supply thereof 40 to the locking mechanism 16 to activate this.

The wheel sensor 32 and control unit 36 of an anti-lock brake system, which is a standard item on many vehicles, are thus being employed for a dual purpose, firstly for the anti-lock brake system itself and secondly to control the self-tracking axle 10 so that the undesirable effect of employing this, that is, the lack of stability at high speed, is obviated by effectively preventing it from operating at high speeds.

When the wheel speed as sensed by sensor 32 drops below a level at which self-tracking axle 10 is unstable on hard cornering, the control unit 36 sends a signal to activation means 38 to deactivate the locking mechanism 16 and hence release the track rod 14. The deactivation is achieved by venting the piston in the air chamber 22 of the locking mechanism 16 to the atmosphere which causes the locking pin 18 to move up and out of the aperture 26 in the track rod 14.

The air supply 40 may solely be used for activation of the locking mechanism l6. However many vehicles include pneumatic devices, for example, the brakes are often pneumatic and many vehicle have an air suspension system. The main air supply of such vehicles can therefore be conveniently used for the locking mechanism 16 of the self-tracking axle 10.

It will be appreciated that the self-tracking axle does not have to be of the type shown in the figures nor indeed does the locking mechanism. It will further be appreciated that the arrangement may be employed with vehicles having more than one self tracking-axle.

Furthermore, whilst in the embodiment described above the sensor and control unit are those of an anti-lock brake system, it will be appreciated that, whilst this is both efficient and economical, it is not essential. A sensor and control unit dedicated solely for use with the self-tracking axle(s) could be provided or the sensor and control unit could be those of another part of the vehicle.

The arrangement is economic and relatively simple and provides for self-tracking at lower speeds, with consequent good manoeuvrability, and a stable fixed axle at high speeds.

**Claims**

1. A vehicle having a number of pairs of wheels, at least one of the pairs of wheels being carried by a self-tracking axle, the self-tracking axle(s) being of the type which includes a locking mechanism which, when activated, locks the wheels in the straight ahead position, comprising at least one wheel sensor which transmits signals indicative of the speed of the vehicle to the control unit, the control unit being so arranged as to cause a self-tracking axle(s) locking mechanism(s) to be activated when the speed is at a particular predetermined level.

2. A vehicle as claimed in claim 1 wherein the vehicle has anti-lock brakes and the wheel sensors and control unit are those of the anti-lock brakes.

3. A vehicle as claimed in either claim 1 or claim 2 wherein the control unit is an electronic control unit arranged to produce a signal when the wheel speed is at or above the desired level, the control unit being connected to activation means which, when a signal is received from the control unit, automatically activates the locking mechanism.

4. A vehicle as claimed in any preceding claim wherein the locking mechanism is pneumatically operated.

5. A vehicle as claimed in claim 4 when dependent on claim 3 wherein the activation means is a solenoid valve.

6. A vehicle as claimed in either claim 4 or claim 5 wherein the vehicle has pneumatic brakes and/or other pneumatic components and the air supply for this or these also serve to supply air to the pneumatically operated locking mechanism.

7. A method of operating a vehicle having a number of pairs of wheels, at least one of the pairs of wheels being carried by a self-tracking axle, the self-tracking axle(s) being of the type which includes a locking mechanism which, when activated, locks the wheels in the straight ahead position, comprising sensing the wheel speed of the vehicle and activating the self-tracking axle(s) locking mechanism(s) when the speed is at a particular predetermined level.

Fig.1.

EP 0 433 030 A1

*Fig. 2.*

32

30

28

34

*Fig. 3.*

24

22

16

18

14

20

26

| DOCUMENTS CONSIDERED TO BE RELEVANT | | | EP 90313471.6 |
|---|---|---|---|

| Category | Citation of document with indication, where appropriate, of relevant passages | Relevant to claim | CLASSIFICATION OF THE APPLICATION (Int. Cl.5) |
|---|---|---|---|
| X | <u>DE - A1 - 2 936 766</u><br>(DAIMLER-BENZ)<br> * Totality *<br>-- | 1,4,6,<br>7 | B 62 D 13/04 |
| A | <u>EP - A1 - 0 299 851</u><br>(FRUEHAUF)<br> * Fig. 1,4,5 *<br>---- | | |

TECHNICAL FIELDS
SEARCHED (Int. Cl.5)

B 62 D

The present search report has been drawn up for all claims

| Place of search | Date of completion of the search | Examiner |
|---|---|---|
| VIENNA | 13-02-1991 | PANGRATZ |

EPO FORM 1503 03.82 (P0401)